# EUROPEAN PATENT SPECIFICATION

(11) **EP 2 614 956 B1**
(45) Date of publication and mention of the grant of the patent: **26.12.2018**
(21) Application number: 13150880.6
(22) Date of filing: 10.01.2013
(51) Int. Cl.: B29L 31/00, D06N 7/00, B32B 27/02, B32B 27/30, B32B 5/02, B29C 45/14, E04F 15/02, B32B 3/06, B32B 21/10

(54) **MODULAR LAMINATED PREFABRICATED ELEMENT FOR FLOORING AND METHOD FOR MAKING IT**
MODULAR LAMINIERTES, VORGEFERTIGTES ELEMENT ZUR BODENVERLEGUNG UND HERSTELLUNGSVERFAHREN
ÉLÉMENT PRÉFABRIQUÉ STRATIFIÉ MODULAIRE POUR REVÊTEMENT DE SOL ET PROCÉDÉ POUR SA FABRICATION

(30) Priority: 13.01.2012 DE 202012000284 U
(43) Date of publication of application: 17.07.2013
(73) Proprietor: Floover World, S.l., 08770 Sant Sadurní D'anoia (ES)
(72) Inventor: Prati, Andrea, 08770 SANT SADURNÍ D'ANOIA (ES); Ferrer Sayol, Joan, 08770 SANT SADURNÍ D'ANOIA (ES)
(74) Representative: Ponti & Partners, S.L.P

(56) References cited:
- EP-A1- 2 782 751
- WO-A1-2013/075813
- WO-A2-2004/109035
- US-A1- 2005 200 051
- US-A1- 2005 255 775
- US-A1- 2006 130 416
- US-A1- 2011 167 744
- US-A1- 2011 296 780
- US-B2- 7 244 333

## Description

The present invention relates to a prefabricated laminated element for flooring that exhibits characteristics of insulation and improved comfort in the tread as well as a great resistance outdoors. It also relates to a method for obtaining it.

### BACKGROUND OF THE INVENTION

Known are in the art modular laminated prefabricated elements for flooring, comprising a rigid base provided on its periphery with attachment means to identical elements, provided on their upper surfaces a passable finishing exposed layer.

An example of this type of element is described in the European patent application EP2246188 by the same Applicant.

The object of this application is generally satisfactory, however, is not optimal from the standpoint of the elastic behavior or for outdoor use.

On the other hand, are known e.g. from U.S. 7,244,333 B2, and also from its family member WO 2004/109035 A2, PVC fabric floor coverings, having acoustic properties, especially due to the "spring effect" of the yarns form which they are made, where any surface impact, like treads, are cushioned by the compression resistance of the yarns composing the fabric. These patent documents disclose all the features of the preamble of claim1. No rigid base in included in the PVC fabric floor coverings disclosed by said patent documents.

WO 2013/075813 discloses a flooring element comprising a rigid base provided on its periphery with attachment means to identical elements, which comprises an upper layer made of vinyl fabric. This document is prior art falling within the terms of Article 54(3) EPC, thus this document is not relevant to the question of inventive step.

US 2011/296780 A1 discloses a flooring element with a base provided on its periphery with attachment means to identical elements, which comprises an upper layer made of vinyl, but where the vinyl of the upper layer is not a vinyl fabric.

US2006130416 discloses a modular laminated prefabricated element for flooring comprising pressure resistant wood material provided on its periphery with tongue-groove connections, and comprising an upper layer made of foamed, cushion polyvinyl chloride.

Also are known vinyl yarns, containing a polyester or glass fiber multifilament core, coated with a vinyl layer, making it resistant to wear, totally waterproof with a pleasant touch due to its elasticity.

### DESCRIPTION OF THE INVENTION

To this end, the present invention proposes a modular laminated prefabricated element for flooring, comprising a rigid base provided on its periphery with attachment means to identical elements, characterized in that it comprises an upper layer made of vinyl fabric, wherein the vinyl fabric comprises yarns made of a PVC outer layer and a core of polyester or fiberglass multifilaments.

With this structure element, the following objects are achieved:
- A spring effect that dramatically improves the impact sound absorption;
- A large dispersion of ambient noise waves;
- the fabric construction itself drastically eliminates the expansion and contraction of vinyl flooring, because it has between yarns a percentage of opening that absorbs the expansion and contraction of each individual thread.
- With the surface layer of polymer monofilament, a great resistance to solar UV is obtained.

According to various optional features of the element:
- The rigid base is made of HDF, PVC (with or without lime or fibreglass), wood or polyester fibers, ABS, wood composites with thermoplastics or polypropylene.
- The fabric has a thickness comprised between 0.5 and 2 mm and a weight of 0.2 kg/m2 and 1 fg/m2.

The invention also relates to a method for manufacturing the inventive modular laminated prefabricated element for flooring previously described comprising the steps of:
- Placing an adhesive glue on one side of a rigid base (2) provided with attachment means to identical elements on its periphery;
- Placing on the adhesive glue a vinyl fabric sheet;
- Attaching the vinyl fabric to the rigid base, and
- Trimming the obtained assembly, thus obtaining the modular element 1.

According to a first embodiment of the method, the glue is of bicomponent or isocyanate-based polyurethane type and the bonding step is performed at a temperature between 120 and 160 ° C.

Preferably, in this first embodiment, the method further comprises a step of milling the attachment means in the periphery of the element and simultaneously with the step of milling a high speed milling at the edge of the vinyl fabric layer is carried out that enables friction welding the frayed edges of the vinyl fabric.

According to a second embodiment of the method of the invention, the method comprises:
- Placing the vinyl fabric with definitive measures in the bottom of a mold;
- Injecting the material into the mold to form the rigid base so that upon cooling the vinyl fabric and the rigid base are closely linked.

According to this second embodiment, the mold includes the complementary shapes of the attachment means of the periphery and more preferably the mold portion corresponding to the free surface of the rigid base comprises shapes complementary to drainage channels of height corresponding to the thickness of the rigid base, such that the product obtained has water piping from the upper part to the bottom part of the element.

### BRIEF DESCRIPTION OF THE DRAWINGS

For better understanding of what has been disclosed some drawings are attached in which, schematically and solely by way of non-limiting example, show a practical embodiment.
Figure 1 is a schematic vertical cross-section of two modular elements according to the invention.
Figure 2 is a drawing showing the shock-absorbing effect of the inventive element.

### DESCRIPTION OF A PREFERRED EMBODIMENT

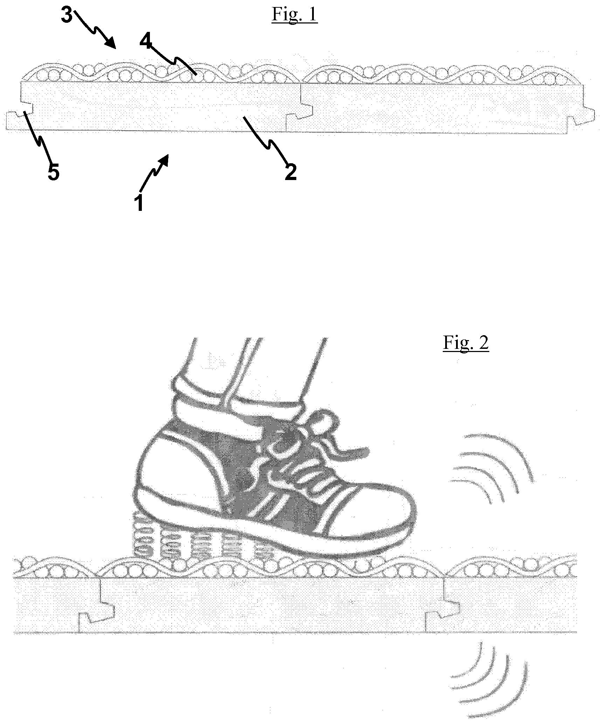

As can be seen in Figure 1, the invention relates modular laminated prefabricated element 1 for flooring, comprising a rigid base 2 provided on its periphery with attachment means 5 and comprising an upper layer 3 made of vinyl fabric 4.

As illustrated pictorially in Figure 2, floating type elements are achieved, of easy installation, with elastic and acoustic properties, which make them very comfortable for walking onto.

The vinyl fabric comprises yarns made of a PVC outer layer and a core of polyester or fiberglass multifilaments. the rigid base is made of HDF, PVC (with or without lime or fibreglass), wood or polyester fibers, ABS, wood composites with thermoplastics or polypropylene.

The fabric has a thickness between 0.5 and 2 mm and a weight of 0.2 kg/m2 and 1 fg/m2. The invention also relates to a method for manufacturing the inventive modular laminated prefabricated element 1 for flooring previously described comprising the steps of:
- Placing an adhesive glue on one side of a rigid base (2) provided with attachment means to identical elements on its periphery;;
- Placing on the adhesive glue a vinyl fabric sheet;
- Attaching the vinyl fabric to the rigid base, and
- Trimming the obtained assembly, thus obtaining the modular element 1.

According to a first embodiment of the method, the glue is of bicomponent or isocyanate-based polyurethane type and the bonding step is performed at a temperature between 120 and 160 ° C.

According to this first embodiment, the method further comprises a step of milling the attachment means in the periphery of the element and simultaneously with the step of milling a high speed milling at the edge of the vinyl fabric layer is carried out that enables friction welding the frayed edges of the vinyl fabric.

According to another embodiment of the method, this comprises the steps of:
- Placing the vinyl fabric with definitive measures in the bottom of a mold;
- Injecting the material into the mold to form the rigid base so that upon cooling the vinyl fabric and the rigid base are closely linked

Preferably the mold includes the complementary shapes of the attachment means of the periphery, so that after the process the clip system is already obtained.

Finally the mold portion corresponding to the free surface of the rigid base comprises shapes complementary to drainage channels of height corresponding to the thickness of the rigid base, such that the product obtained has water piping from the upper part to the bottom part of the element. This feature, in combination with the fabric, which is porous and water-resistant, makes the element of the invention particularly suited to outdoor, since in case of rain is perfectly capable of draining water.

## Claims

1. Modular laminated prefabricated element (1) for flooring, comprising a rigid base (2) provided on its periphery with attachment means to identical elements, which comprises an upper layer (3) made of vinyl fabric (4), **characterized in that** the vinyl fabric comprises yarns made of a PVC outer layer and a core of polyester or fiberglass multifilament.

2. Element according to claim 1, wherein the rigid base is made of HDF, PVC (with or without lime or fibreglass), wood or polyester fibers, ABS, wood composites with thermoplastics or polypropylene.

3. Method for manufacturing a modular laminated prefabricated element (1) for flooring according to any of the preceding claims comprising the steps of:
- Placing on one side of a rigid base (2) an adhesive glue;
- Placing on the adhesive glue a vinyl fabric sheet;
- Attaching the vinyl fabric to the rigid base, and
- Trimming the obtained assembly;
Thus obtaining the modular element (1).

4. Method according to the preceding claim, in which the glue is of bicomponent or isocyanate-based polyurethane type and the bonding step is performed at a temperature between 120 and 160 ° C.

5. Method according to either of the two preceding claims, further comprising a step of milling the attachment means in the periphery of the element.

6. Method according to the preceding claim, wherein simultaneously with the step of milling a high speed milling at the edge of the vinyl fabric layer is carried out that enables friction welding the frayed edges of the vinyl fabric.

## Patentansprüche

1. Modulares laminiertes vorgefertigtes Element (1) für Bodenbelag, das eine starre Basis (2) aufweist, die auf der Peripherie desselben mit Anbringungseinrichtungen an identische Elemente bereitgestellt ist, das eine obere Schicht (3) bestehend aus Vinylgewebe (4) aufweist, **dadurch gekennzeichnet, dass** das Vinylgewebe Garne aufweist, die aus einer PVC-Außenschicht und einem Kern aus Polyester- oder Glasfasermultifilament besteht.

2. Element gemäß Anspruch 1, bei dem die starre Basis aus HDF, PVC (mit oder ohne Kalk oder Glasfaser), Holz oder Polyesterfasern, ABS, Holzverbunden mit Thermoplasten oder Polypropylen besteht.

3. Verfahren zum Herstellen eines modularen laminierten vorgefertigten Elementes (1) für Bodenbelag gemäß einem der vorhergehenden Ansprüche, das folgende Schritte aufweist:
- Platzieren eines haftfähigen Klebstoffes auf einer Seite einer starren Basis (2);
- Platzieren einer Vinylgewebeschicht auf dem haftfähigen Klebstoff;
- Anbringen des Vinylgewebes an der starren Basis, und
- Trimmen der erhaltenen Anordnung;
wodurch somit das modulare Element (1) erhalten wird.

4. Das Verfahren gemäß dem vorhergehenden Anspruch, bei dem der Klebstoff vom Bikomponenten- oder Isocyanat-basierten Polyurethan-Typ ist und der Bondschritt bei einer Temperatur zwischen 120°C und 160°C ausgeführt wird.

5. Verfahren gemäß einem der vorhergehenden Ansprüche, das ferner einen Schritt des Fräsens der Anbringungseinrichtungen in der Peripherie des Elementes aufweist.

6. Verfahren gemäß einem der vorhergehenden Ansprüche, bei dem gleichzeitig zu dem Schritt des Fräsens ein Hochgeschwindigkeitsfräsen an dem Rand der Vinylgewebeschicht ausgeführt wird, der ein Reibungsschweißen der ausgefransten Ränder des Vinylgewebes ermöglicht.

## Revendications

1. Elément préfabriqué stratifié modulaire (1) pour revêtement de sol, comprenant une base rigide (2) prévue sur sa périphérie avec des moyens de fixation à des éléments identiques, qui comprend une couche supérieure (3) constituée de tissu de vinyle (4), **caractérisé en ce que** le tissu de vinyle comprend des fils constitués d'une couche externe de PVC et d'un coeur de multifilament de polyester ou fibre de verre.

2. Elément selon la revendication 1, dans lequel la base rigide est constituée de HDF, PVC (avec ou sans chaux ou fibre de verre), fibres de bois ou polyester, ABS, composites de bois avec thermoplastiques ou polypropylène.

3. Procédé de fabrication d'un élément préfabriqué stratifié modulaire (1) pour revêtement de sol selon l'une quelconque des revendications précédentes comprenant les étapes de :
- mise en place sur un côté d'une base rigide (2) d'une colle adhésive ;
- mise en place sur la colle adhésive d'une feuille de tissu de vinyle ;
- fixation du tissu de vinyle à la base rigide, et
- ajustage de l'ensemble obtenu :
permettant ainsi d'obtenir l'élément modulaire (1).

4. Procédé selon la revendication précédente, dans lequel la colle est de type polyuréthane à base d'isocyanate ou à deux composants et l'étape de liaison est effectuée à une température entre 120 et 160 °C.

5. Procédé selon l'une ou l'autre des deux revendications précédentes, comprenant en outre une étape de fraisage des moyens de fixation dans la périphérie de l'élément.

6. Procédé selon la revendication précédente, dans lequel simultanément à l'étape de fraisage, est effectué un fraisage à grande vitesse au bord de la couche de tissu de vinyle qui permet un soudage par friction des bords effilochés du tissu de vinyle.
